# EUROPÄISCHE PATENTSCHRIFT

(11) **EP 1 185 162 B1**
(45) Veröffentlichungstag und Bekanntmachung des Hinweises auf die Patenterteilung: **22.12.2004**
(21) Anmeldenummer: 00929567.6
(22) Anmeldetag: 30.05.2000
(51) Int. Cl.: A01J 5/007

(54) **VERFAHREN ZUM MASCHINELLEN MELKEN VON TIEREN, INSBESONDERE VON KÜHEN**
METHOD FOR MACHINE-MILKING ANIMALS, IN PARTICULAR, COWS
PROCEDE DE TRAITE MECANIQUE D'ANIMAUX, EN PARTICULIER DE VACHES

(30) Priorität: 14.06.1999 DE 19926957
(43) Veröffentlichungstag der Anmeldung: 13.03.2002
(73) Patentinhaber: WestfaliaSurge GmbH, 59302 Oelde (DE)
(72) Erfinder: SCHULZE-WARTENHORST, Bernhard, D-48231 Warendorf (DE)
(74) Vertreter: Neumann, Ditmar
(86) Internationale Anmeldenummer: PCT/EP2000/004947
(87) Internationale Veröffentlichungsnummer: WO 2000/076297

(56) Entgegenhaltungen:
- EP-A- 0 630 558
- DE-A- 3 906 475
- US-A- 4 011 838
- US-A- 5 218 924
- US-A- 5 443 035
- US-A- 5 697 323

## Beschreibung

Der Gegenstand der Erfindung bezieht sich auf ein Verfahren zum maschinellen Melken von Tieren, insbesondere von Kühen.

Es ist bekannt, daß zur Steigerung der Melkwilligkeit eines Tieres, insbesondere einer Kuh, eine Euterstimulation vor dem eigentlichen Melkvorgang zweckmäßig ist. Die älteste Methode der Euterstimulation ist die manuelle Eutermassage, die beispielsweise von Hand während einer Euterreinigung durchgeführt wird. Diese Euterreinigung bildet einen ersten taktilen Reiz zur Stimulation des Tieres. Danach wird unverzüglich weiter stimuliert. Nach dieser Euterstimulation erfolgt der eigentliche Melkvorgang.

Durch die DE 33 23 676 C2 sind unterschiedliche Verfahren zum maschinellen Melken von Tieren, insbesondere von Kühen, welche auch eine Euterstimulation beinhalten, bekannt.

Im Zuge der Weiterentwicklung der Melkeinrichtungen sind auch Melkeinrichtungen bekannt geworden, wie sie beispielsweise in der EP 0 300 115 B1 beschrieben sind. Bei einer solchen Melkeinrichtung wird ein jeder Melkbecher an eine zu melkende Zitze angesetzt. Die Lage einer Zitze wird durch einen Sensor geortet und mit einer von einer Ansetzvorrichtung jeweils eingenommenen Stellung verglichen und der Becher in Richtung auf die Zitze solange verändert, bis die Ansetzvorrichtung den Zitzenbecher über die Zitze geschoben hat. Die Zeitspanne, die dazu notwendig ist, um die einzelnen Zitzenbecher an die jeweilige Zitze anzubringen, kann sehr unterschiedlich sein, da die Ortung der einzelnen Zitzen auch in Abhängigkeit von der aktuellen Position der Zitze innerhalb des Melkstandes bestimmt werden muß. Bei einem Melkstand, in dem sich das Tier frei bewegen kann, kann sich diese Zeitspanne noch weiter erhöhen. Es besteht zwar die Möglichkeit das Tier in dem Melkstand in eine Zwangsposition zu bringen, dies wird jedoch seitens des Tieres als unangenehm empfunden, so daß die Melkwilligkeit des Tieres abnimmt.

Die EP-A-0 630 558 offenbart ein automatisches Melksystem bei dem die Zitzen des Tieres sequentiell gereinigt und stimuliert werden, wobei zwischen einer ersten Euterstimulation und einem Melkvorgang eine stimulationslose phase vorhanden ist.

Zwischen der ersten Euterstimulation und dem Beginn des eigentlichen Melkvorgangs kann daher eine größere Zeitspanne vergehen. Dies führt dazu, daß sowohl die Stimulationsintensität, wie aber auch die Verfügbarkeit und Wirkungsweise des Hormons Ocytocin beeinflußt wird, so daß das Tier mit einer schlechteren Milchabgabe reagiert. In einem solchen Fall reicht, wenn zwischen der Stimulation und dem Beginn des Melkens eine Wartezeit auftritt, die Stimulation nicht mehr zwangsläufig aus, um ein vollständiges und zügiges Melken zu gewährleisten.

Hiervon ausgehend liegt der vorliegenden Erfindung die Aufgabe zugrunde, ein Verfahren anzugeben, bei dem die Melkwilligkeit des Tieres erhöht wird, insbesondere dann, wenn zwischen einer Vorstimulation und dem eigentlichen Melkvorgang eine Wartezeit liegt.

Diese Aufgabe wird erfindungsgemäß durch ein Verfahren zum maschinellen Melken von Tieren, insbesondere von Kühen, mit den Merkmalen des Anspruchs 1 gelöst. Vorteilhafte Weiterbildungen und Ausgestaltungen des Verfahrens sind Gegenstand der abhängigen Ansprüche.

Nach dem erfindungsgemäßen Verfahren zum maschinellen Melken von Tieren, insbesondere von Kühen, wird vorgeschlagen, daß zur Euterstimulation die Zitzen des Tieres sequentiell stimuliert werden. Die Stimulation erfolgt dabei nicht auf allen Zitzen gleichzeitig, sondern nur an ausgewählten einzelnen oder mehreren Zitzen. An den übrigen Zitzen findet keine Stimulation statt, so daß dort die natürliche Milchflußintensität des Tieres zum Melken ausgenutzt werden kann. Durch diese Verfahrensführung wird ein schnelles, ungebremstes Melken des Tieres erreicht. Dies führt auch zu einer Reduktion der gesamten Melkzeit.

Hierdurch kann die Anzahl der gemolkenen Kühe pro Stunde in automatisierten Melkanlagen erhöht werden, was einen bedeutenden betriebswirtschaftlichen Aspekt darstellt.

Durch die erfindungsgemäße Erfahrensführung wird auch erreicht, daß der Melkvorgang im wesentlichen innerhalb einer Zeitspanne erfolgt, in der das Hormon Ocytocin seine Wirkung auf die Kontraktion des Alveolargewebes des Euters noch hat.

Überraschenderweise ist festgestellt worden, daß das erfindungsgemäße Verfahren sehr effektiv ist, wenn lediglich einzelne Zitzen aufeinanderfolgend stimuliert werden. Die Stimulation der einzelnen Zitzen kann dabei vorzugsweise periodisch erfolgen. Während an einer Zitze die Stimulation erfolgt, wird an den weiteren Zitzen des Tieres gemolken, so daß die Melkzeit noch weiter reduziert werden kann.

Nach einer noch weiteren vorteilhaften Ausgestaltung des Verfahrens wird vorgeschlagen, daß zwischen zwei Stimulationsphasen zweier unterschiedlicher Zitzen eine stimulationslose Phase liegen kann, ohne daß hierdurch die Melkgeschwindigkeit erkennbar darunter leidet. Die Stimulation kann auch kontinuierlich in dem Sinne erfolgen, daß sich unmittelbar an ein Ende einer Stimulationsphase einer Zitze eine Stimulationsphase einer anderen Zitze anschließt.

Gemäß einer noch weiteren vorteilhaften Ausgstaltung des Verfahrens wird vorgeschlagen, daß vor der sequentiellen Stimulation der einzelnen Zitzen das Euter einer Vorstimulation unterzogen wird. Bei der Vorstimulation kann es sich beispielsweise um eine durchzuführende Euterreinigung des Tieres handeln. Zwischen der Vorstimulation und der darauffolgenden sequentiellen Stimulation kann auch eine stimulationslose Phase vorliegen, in der beispielsweise Melkbecher an die Zitzen des Tieres angebracht werden. Diese stimulationslose Phase, die bei den bekannten Verfahren zum maschinellen Melken einen negativen Einfluß auf das Melkergebnis haben kann, wird bei dem Verfahren durch die sequentielle Stimulation der einzelnen Zitzen des Euters kompensiert. Das Tier wird trotz einer möglichen Wartezeit in eine positive Erwartungshaltung zum Melken zurückversetzt.

Die stimulatorische Wirkung kann durch die Gestaltung der Pulsatordruckverläufe in den Melkbecherzwischenräumen erreicht werden. Dabei kann die Intensität der sequentiellen Stimulation während des Abmelkvorgangs verändert werden. Insbesondere wird vorgeschlagen, daß die Intensität der sequentiellen Stimulation während des Melkvorgangs abnimmt, um nach einem Setzen einer erneuten Stimulation ein schnelles und zügiges Melken zu gewährleisten.

Die Abnahme der Intensität der sequentiellen Stimulation kann kontinuierlich erfolgen. Es ist auch möglich, die Intensität der sequentiellen Stimulation während des Melkvorgangs diskontinuierlich zu verringern.

Vorzugsweise wird die Intensität der sequentiellen Stimulation auf einen ersten Abschnitt der Melkzeit des Tieres beschränkt. Insbesondere wird vorgeschlagen, daß die Intensität der Stimulation nach Ablauf von ca. 2 Minuten der Melkzeit abgeschwächt gegen Ende der reinen Melkzeit beendet wird.

Nach einer noch weiteren vorteilhaften Ausgestaltung des Verfahrens wird vorgeschlagen, daß während des Melkvorgangs der Milchfluß oder eine dem Milchfluß entsprechende Kenngröße gemessen bzw. bestimmt und die Intensität der sequentiellen Stimulation in Abhängigkeit von dem Milchfluß bzw. der Kenngröße verändert wird. Insbesondere dadurch, daß der Milchfluß gemessen wird, kann bei einem nachlassenden Milchfluß das Melkende erkannt werden, so daß die Änderung des Betrages des Milchflusses als Ausgangskenngröße für die Bestimmung des Intensitätsverlaufes der sequentiellen Stimulation genutzt werden kann. Es ist auch möglich, durch die Erfassung der Gesamtmilchmenge der Vormelkzeiten eine Kenngröße abzuleiten, anhand derer die Intensität der sequentiellen Stimulation verändert werden kann. Vorzugsweise wird beim Erreichen von ca. 50 bis 75 % der üblichen Milchmenge die Intensität der Stimulation verringert.

Da die zu melkenden Tiere periodisch den Melkstand aufsuchen, kann durch die Speicherung bestimmter Daten, beispielsweise der Melkdauer eines vorhergehenden Melkvorgangs eine erste Näherung für die Bestimmung der aktuellen Melkzeit erfolgen.

Die Intensität der Stimulation kann auch tierindividuell eingestellt werden. Insbesondere wird vorgeschlagen, daß die Stimulation zur Mitte der Melkzeit hin verringert wird, wenn das Tier am Beginn der Laktation steht. Im Laufe der fortschreitenden Laktation kann dann zu Beginn des Melkens eine gleitend ansteigende Intensität zu Beginn bis zur ca. Mitte des Melkvorgangs eingestellt werden, die sich dann wieder verringert.

## Patentansprüche

1. Verfahren zum maschinellen Melken von Tieren, insbesondere von Kühen, bei dem zur Euterstimulation die Zitzen des Tieres sequentiell stimuliert werden, wobei zwischen einer ersten Euterstimulation und einem Melkvorgang eine stimulationslose Phase vorhanden ist und die stimulierende Wirkung durch die Gestaltung von Pulsatordruckverläufen in Melkbecher zwischenräumen erreicht wird.

2. Verfahren nach Anspruch 1, bei dem aufeinanderfolgend lediglich einzelne Zitzen stimuliert werden.

3. Verfahren nach Anspruch 2, bei dem zwischen zwei Stimulationsphasen eine stimulationslose Phase liegt.

4. Verfahren nach Anspruch 2, bei dem sich unmittelbar an ein Ende einer Stimulationsphase einer Zitze eine Stimulationsphase einer anderen Zitze anschließt.

5. Verfahren nach einem der Ansprüche 1 bis 4, bei dem vor der sequentiellen Stimulation der einzelnen Zitzen des Euters einer Vorstimulation unterzogen wird.

6. Verfahren nach Anspruch 5, bei dem die Intensität der sequentiellen Stimulation während des Melkvorgangs abnimmt.

7. Verfahren nach Anspruch 6, bei dem die Intensität der sequentiellen Stimulation während des Melkvorgangs kontinuierlich abnimmt.

8. Verfahren nach Anspruch 6, bei dem die Intensität der sequentiellen Stimulation während des Melkvorgangs diskontinuierlich abnimmt.

9. Verfahren nach einem der Ansprüche 5 bis 8, bei dem während des Melkvorgangs der Milchfluß oder eine dem Milchfluß entsprechende Kenngröße gemessen bzw. bestimmt und die Intensität der sequentiellen Stimulation in Abhängigkeit von dem Milchfluß bzw. der Kenngröße verändert wird.

## Claims

1. Method for milking of animals by machine, in particular of cows, during which, to stimulate the udder, the teats of the animal are stimulated sequentially, wherein between a first udder stimulation and a milking procedure there is a phase without stimulation and the stimulating effect is achieved by the formation of pulsed pressure processes in milking cup interspaces.

2. Method according to claim 1, in which only individual teats are successively stimulated.

3. Method according to claim 2, in which a phase without stimulation occurs between two stimulation phases.

4. Method according to claim 2, in which, directly at the end of a stimulation phase of a teat a stimulation phase of another teat occurs.

5. Method according to any one of claims 1 to 4, in which before the sequential stimulation of a single teat, the udder undergoes a pre-stimulation.

6. Method according to claim 5, in which the intensity of the sequential stimulation decreases during the milking procedure.

7. Method according to claim 6, in which the intensity of the sequential stimulation during the milking procedure decreases continuously.

8. Method according to claim 6, in which the intensity of the sequential stimulation during the milking procedure decreases discontinuously.

9. Method according to any one of claims 5 to 8, in which the milk flow or a parameter corresponding to the milk flow is either measured or determined during the milking procedure and the intensity of the sequential stimulation is changed depending on the milk flow or on the parameter.

## Revendications

1. Procédé de traite mécanique d'animaux, notamment de vaches, dans lequel pour la stimulation du pis les trayons de l'animal sont stimulés séquentiellement, une phase sans stimulation se présentant entre une première stimulation du pis et un processus de traite et l'effet stimulant étant obtenu par la formation d'allures de pression de pulsateur dans des espaces intermédiaires du gobelet trayeur.

2. Procédé selon la revendication 1, dans lequel seulement des trayons individuels sont stimulés successivement.

3. Procédé selon la revendication 2, dans lequel une phase sans stimulation se trouve entre deux phases de stimulation.

4. Procédé selon la revendication 2, dans lequel une fin d'une phase de stimulation d'un trayon est directement suivie d'une phase de stimulation d'un autre trayon.

5. Procédé selon l'une des revendications 1 à 4, dans lequel avant la stimulation séquentielle des trayons individuels le pis est soumis à une préstimulation.

6. Procédé selon la revendication 5, dans lequel l'intensité de la stimulation séquentielle diminue durant le processus de traite.

7. Procédé selon la revendication 6, dans lequel l'intensité de la stimulation séquentielle diminue continuellement durant le processus de traite.

8. Procédé selon la revendication 6, dans lequel l'intensité de la stimulation séquentielle diminue de manière discontinue durant le processus de traite.

9. Procédé selon l'une des revendications 5 à 8, dans lequel durant le processus de traite le flux de lait ou une valeur caractéristique correspondant au flux de lait est mesurée ou déterminée et l'intensité de la stimulation séquentielle est modifiée en fonction du flux de lait ou de la valeur caractéristique.
